# EUROPÄISCHE PATENTSCHRIFT

(11) **EP 2 552 742 B1**
(45) Veröffentlichungstag und Bekanntmachung des Hinweises auf die Patenterteilung: **18.12.2013**
(21) Anmeldenummer: 11708994.6
(22) Anmeldetag: 02.03.2011
(51) Int. Cl.: B60N 2/235, B60N 2/16, B60N 2/18

(54) **FAHRZEUGSITZ**
VEHICLE SEAT
SIÈGE DE VÉHICULE

(30) Priorität: 01.04.2010 DE 102010014058
(43) Veröffentlichungstag der Anmeldung: 06.02.2013
(73) Patentinhaber: Keiper GmbH & Co. KG, 67657 Kaiserslautern (DE)
(72) Erfinder: SCHEHL, Stefan, 66994 Dahn (DE); KÄMMERER, Joachim, 67663 Kaiserslautern (DE)
(74) Vertreter: Wilhelm, Wolfgang
(86) Internationale Anmeldenummer: PCT/EP2011/001007
(87) Internationale Veröffentlichungsnummer: WO 2011/120612

(56) Entgegenhaltungen:
- DE-A1- 10 306 626
- FR-A1- 2 433 433

## Beschreibung

Die Erfindung betrifft einen Fahrzeugsitz mit den Merkmalen des Oberbegriffs des Anspruches 1.

Aus der DE 103 06 626 A1 ist ein gattungsgemäßer Fahrzeugsitz mit einer Sitzhöhen- und Sitzkissenneigungsverstellung bekannt. Dieser Fahrzeugsitz ist längseinstellbar. Hierbei ist eine Mehrzahl von gegeneinander verschwenkbaren Armen und eine Kulissenführung vorgesehen, welche die kombinierte Sitzhöhen- und Sitzkissenneigungsverstellung ermöglichen.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Durch eine erfindungsgemäße Anordnung einer Mehrzahl von Koppelelementen ermöglicht sich eine Integration der Neigungseinstellbarkeit in die Struktur. Für die Einstellbarkeit sind lediglich zwei Beschläge im Mehrgelenk vorzusehen, wobei bevorzug einer der Beschläge für die Höheneinstellung und der andere Beschlag für die Neigungseinstellung gelöst wird, während jeweils der andere Beschlag fest ist. Die Festlegung des Mehrgelenks erfolgt bevorzugt ausschließlich über die beiden Beschläge, d.h. alle anderen Gelenke sind bevorzugt ohne Feststellmechanismus ausgebildet. Natürlich können jedoch zur Erhöhung der Sicherheit zusätzliche Maßnahmen zur Feststellung einzelner Gelenke vorgesehen sein, diese sind jedoch für die eigentliche Funktion des höhen-/neigungseinstellbaren Fahrzeugsitzes nicht erforderlich.

Insbesondere bevorzugt weisen die beiden Beschläge ein gemeinsames Koppelelement auf, an dessen einander gegenüberliegenden Enden sie angeordnet sind. Bei diesem Koppelelement handelt es sich besonders bevorzugt um das mit der Sitzstruktur und damit der Sitzfläche verbundene Koppelelement des Mehrgelenks.

Vorzugsweise haben zwei einander gegenüberliegende Koppelelemente eine dreieckförmige Struktur, wobei in jedem der Eckbereiche ein Gelenk vorgesehen ist. Die Dreiekstruktur ist bevorzugt einteilig ausgebildet, jedoch ist auch eine mehrteilige Ausgestaltung möglich, beispielsweise durch an den Gelenken miteinander fest verbundene Koppelstangen.

Vorzugsweise ist mindestens einer der Beschläge, besonders bevorzugt beide Beschläge, als Rastbeschlag ausgebildet. Alternativ können sie auch als Drehbeschläge oder in Gestalt eines einfachen Verriegelungsmechanismus ausgebildet sein, welcher in diskreten Positionen mit hierfür vorgesehenen Bolzen o.ä. vernegelt.

Im folgenden ist die Erfindung anhand eines in der Zeichnung dargestellten Ausführungsbeispiels näher erläutert. Es zeigen
- Fig. 1: eine schematische Seitenansicht des Ausführungsbeispiels in einer mittleren Sitzhöhe mit etwa horizontaler Sitzflächenanordnung,
- Fig. 2: eine schematische Seitenansicht des Fahrzeugsitzes von Fig. 1 in niedrigster Sitzhöhe mit etwa horizontaler Sitzflächenanordnung,
- Fig. 3: eine schematische Seitenansicht des Fahrzeugsitzes von Fig. 1 in größter Sitzhöhe mit etwa horizontaler Sitzflächenanordnung,
- Fig. 4: eine schematische Seitenansicht des Fahrzeugsitzes von Fig. 1 in mittler-er Sitzhöhe mit maximal nach vorn geneigter Sitzflächenanordnung,
- Fig. 5: eine schematische Seitenansicht des Fahrzeugsitzes von Fig. 1 in mittler-er Sitzhöhe mit maximal nach hinten geneigter Sitzflächenanordnung, und

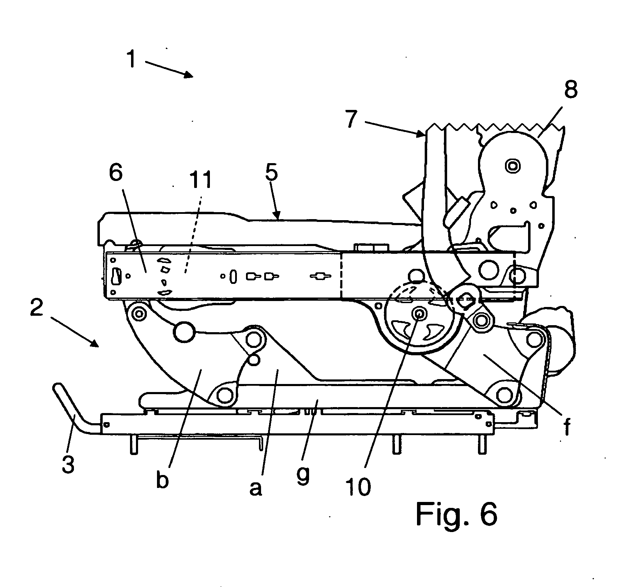

- Fig. 6: eine Seitenansicht des Fahrzeugsitzes von Fig. 1.

Ein Fahrzeugsitz 1 für ein Nutzfahrzeug oder ein anderes Kraftfahrzeug ist über einen Unterbau 2 mit einem Längseinsteller 3 in Sitzlängsrichtung verschiebbar mit Schienen (nicht dargestellt) verbunden. Der Fahrzeugsitz 1 weist eine höhen- und neigungseinstellbare Sitzfläche 5 mit einer ein Polster tragenden Sitzstruktur 6 und eine im Wesentlichen unabhängig von der Sitzneigung einstellbare Lehne 7 mit einer ein Polster tragenden Lehnenstruktur 8 auf.

Der Fahrzeugsitz ist vorliegend im Wesentlichen spiegelbildlich zur Mittellängsebene ausgebildet, so dass im Folgenden nur auf eine Seite näher eingegangen wird. Die Übertragung von Bewegungen, insbesondere auch von Stellbewegungen erfolgt über senkrecht zur Mittellängsebene angeordnete Koppelelemente, wie bspw. profilierte Querrohre.

Der komplette Unterbau 2 umfasst ein siebengliedriges Achtgelenk mit sieben a, b, c, d, e, f, g Schwingen und mit 8 Gelenken ab, bc, cd, de, ef, bg, fg, fa, wobei zwei von diesen Gelenken de, ef durch Beschläge 10, 11 sicherbar sind. Wenn die beiden Beschläge 10, 11 festgestellt sind, so hat das System keinen Freiheitsgrad, d.h. der Sitz ist fest eingestellt.

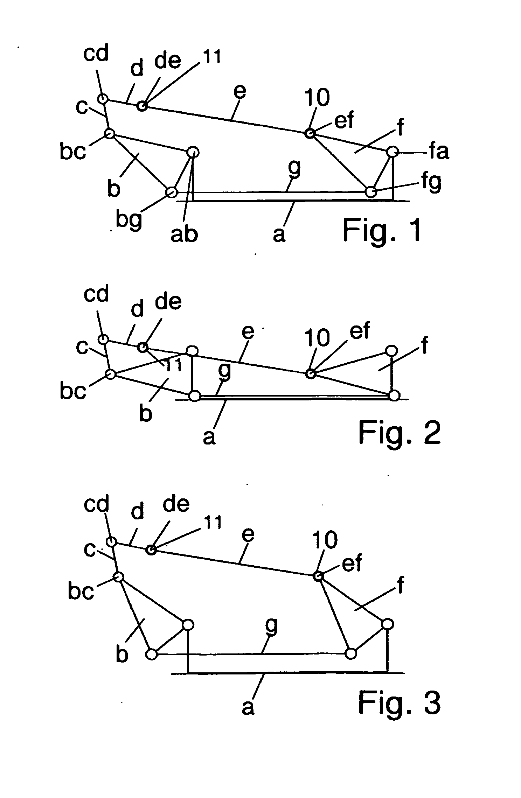

Im Folgenden wird unter Bezugnahme auf die Figuren 1 bis 3 die Höheneinstellung näher beschrieben. Die Höhenverstellung erfolgt über ein sechsgliedriges Siebengelenk mit sechs Schwingen, welche durch Koppelelemente a, b, c, d-e, f, g gebildet sind, wobei dieselben über sieben Gelenke miteinander verbunden sind. Für die Höheneinstellung ist das Gelenk de blockiert, so dass die Koppelelemente d und e wie eine einzige Schwinge wirken, so dass sich aus dem siebengliedrigen Achtgelenk besagtes sechsgliedrige Siebengelenk ergibt.

Hierbei ist das Koppelelement a, welches die Gelenke ab und fa aufweist, direkt oder über Zwischenelemente verschiebbar in den am Fahrzeugboden angeordneten Schienen angeordnet, wobei die Gelenke ab und fa nach oben versetzt angeordnet sind und aufgrund ihrer erhöhten Anordnung in Zusammenwirken mit der Sitzstruktur 6 die minimale Sitzhöhe begrenzen.

Das gelenkig mit dem ersten Koppelelement a am vorderen Gelenk ab verbundene, zweite Koppelelement b, welches als Schwinge dient und um das Gelenk ab verschwenkbar ist, ist an einem anderen Ende im Gelenk bc mit dem dritten Koppelelement c gelenkig verbunden. Das Koppelelement c ist im Gelenk cd mit einem vierten Koppelelement d verbunden, welches seinerseits im Gelenk de mit einem fünften Koppelelement e verbunden ist. Für die Höheneinstellung ist jedoch dieses Gelenk de vorliegend festgestellt. Das fünfte Koppelelement e ist über das Gelenk ef mit einem sechsten Koppelelement f verbunden, wobei dieses Gelenk - entsprechend dem Gelenk de - feststellbar ist. Ferner ist noch ein siebtes Koppelelement g zwischen den Koppelelementen b und f vorgesehen, welches über Gelenke bg und fg gelenkig angebracht ist.

Das zweite Koppelelement b ist, wie aus den Darstellungen ersichtlich, dreieckförmig ausgebildet und weist ein weiteres Gelenk bg auf, mit dem es mit dem unteren Koppelelement g gelenkig verbunden ist, auf dessen Funktion an späterer Stelle näher eingegangen wird. Eine entsprechende Gestalt weist auch das am anderen Ende des Koppelelements a angeordnete Koppelelement f auf, welches über ein weiteres Gelenk fg mit dem gegenüberliegenden Ende des Koppelelements g verbunden ist. Dieses Koppelelement g sorgt dafür, dass sich die Koppelelemente b und f gleichförmig bewegen. Die Sitzfläche 5 sinkt bei einem Öffnen des Beschlags 10 nicht nach unten, da eine Feder den Sitzrahmen nach oben drückt.

Für die Fixierung ist im Gelenk ef ein erster Beschlag 10 und im Gelenk de ein zweiter Beschlag 11 vorgesehen. Beide Beschläge sind vorliegend als Rastbeschläge ausgebildet, wie in der DE 10 2006 015 560 B3 offenbart, d.h. der Winkel zwischen den angrenzenden Koppelelementen kann eingestellt und fixiert werden, wodurch auch alle anderen Winkel bestimmt sind.

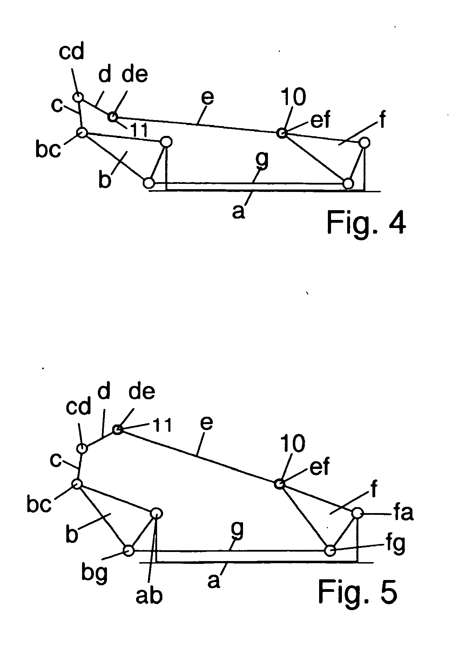

Im Folgenden wird unter Bezugnahme auf die Figuren 4 und 5 die Neigungseinstellung näher beschrieben. Der komplette Unterbau 2 umfasst, wie vorstehend beschrieben, ein siebengliedriges Achtgelenk mit sieben a, b, c, d, e, f, g Schwingen und mit 8 Gelenken ab, bc, cd, de, ef, bg, fg, fa, wobei zwei von diesen Gelenken de, ef durch Beschläge 10, 11 sicherbar sind. Für eine Neigungseinstellung ist der erste Beschlag 10 fest, d.h. der Winkel zwischen den Koppelelementen e und f ist während der Neigungseinstellung konstant und die Koppelelemente e und f wirken wie eine einzige Schwinge, so dass sich wiederum ein sechsgliedriges Siebengelenk ergibt, welches sich jedoch vom sechsgliedrigen Siebengelenk der Höheneinstellung unterscheidet.

Die Neigungseinstellung erfolgt über eine Betätigung des Beschlags 11. Durch eine Verkleinerung des Winkels zwischen den Koppelelementen d und e, ausgehend von einem überstreckten Winkel (im Mehrgelenk) von Fig. 4 hebt sich das Gelenk de an, wodurch die Neigung des Koppelelements e, an welchem die Sitzfläche 5 angeordnet ist, gegenüber dem vorliegend parallel zur Horizonzalen angeordneten Koppelelement a verändert wird, so dass vorliegend die vordere Sitzkante angehoben wird. Auf Grund des festen Beschlags 10 bleibt der Winkel zwischen den Koppelelementen e und f unverändert. Das als Dreieck ausgebildete Koppelelement fwird daher ebenfalls in seiner Neigung verändert. Die Bewegung wird im Gelenk fg auf das zusätzliche Koppelelement g und damit auf das gegenüberliegende dreieckförmige Koppelelement b übertragen (Gelenk bg), d.h. die Schwenkbewegung der beiden dreieckförmigen Koppelelemente b und f entspricht einander. Das Gelenk bc wird entsprechend dem Gelenk ef angehoben und das kurze Koppelelement c schwenkt in Anpassung an die Bewegung des beschlagfesten Koppelelements d, mit dem es über das Gelenk cd verbunden ist.

Die schematische Zeichnung zeigt gleich lange Koppelelemente a und g und zwei in der Anordnung ihrer Gelenke einander entsprechende Koppelelemente b und f, was ein Entkoppeln der Höhen- und Neigungseinstellung ermöglicht.

Sind die Koppelelemente a und g jedoch unterschiedlich lang und/oder die Koppelelemente b und f in der Anordnung ihrer Gelenke verschieden, so ergibt sich eine Überlagerung der Höhen- und Neigungseinstellung.

Alternativ zu der vorstehenden Beschreibung kann der Beschlag 10 auch in einem der folgenden Gelenke vorgesehen sein: ab, fa, fg, bg, bc. Die Anordnung im Gelenk ef ist jedoch vorteilhaft, da in diesem Fall der Beschlag 10 am Sitzrahmen befestigt werden kann.

Alternativ zu der vorstehenden Beschreibung kann der Beschlag 11 auch im Gelenk cd angeordnet sein, jedoch ist die Anordnung im Gelenk de vorteilhaft, da in diesem Fall der Beschlag 11 am Sitzrahmen befestigt werden kann.

Beim Beschlag 10 kann es sich, wie beschrieben, um einen Rastbeschlag handeln, jedoch sind alternativ auch ein Drehbeschlag oder ein sonstiger Verriegelungsmechanismus möglich. Im Falle des Beschlags 11 ist bevorzugt, wie vorstehend beschrieben, ein Rastbeschlag vorgesehen, jedoch kann alternativ auch ein Drehbeschlag vorgesehen sein.

### Bezugszeichenliste

1 Fahrzeugsitz
2 Unterbau
3 Längseinsteller
5 Sitzfläche
6 Sitzstruktur
7 Lehne
8 Lehnenstruktur
10 Beschlag (Höheneinstellung)
11 Beschlag (Neigungseinstellung)
a, b, c, d, e, f, g Koppelelement
ab, bc, cd, de, ef, bg, fg, fa Gelenk

## Patentansprüche

1. Fahrzeugsitz, insbesondere Nutzfahrzeugsitz, mit einem Unterbau (2), einer eine Sitzfläche (5) tragenden oder dieselbe bildenden Sitzstruktur (6) und einer Mehrzahl von Koppelelementen (a, b, c, d, e, f, g), welche eine Höheneinstellbarkeit und eine Neigungseinstellbarkeit der Sitzfläche (5) relativ zum Unterbau (2) ermöglichen, **dadurch gekennzeichnet, daß**
die Höheneinstellung über ein sechsgliedriges Siebengelenk mit sechs Schwingen erfolgt, die durch sieben Koppelelemente (a, b, c, d, e, f, g) gebildet sind, wobei zwei erste benachbarte Koppelelemente (e, f) in einem ersten Gelenk (ef) über einen ersten Beschlag (10) in ihrer Winkelstellung zueinander veränderbar sind, und zwei zweite benachbarte Koppelelemente (d, e) in einem zweiten Gelenk (de) in ihrer Winkelstellung zueinander durch einen zweiten Beschlag (11) festgestellt sind, und
die Neigungseinstellung über das sechsgliedriges Siebengelenk mit sechs Schwingen erfolgt, die durch die sieben Koppelelemente (a, b, c, d, e, f, g) gebildet sind, wobei besagte zwei benachbarte Koppelelemente (e, f) im ersten Gelenk (ef) über einen ersten Beschlag (10) in ihrer Winkelstellung zueinander festgestellt sind, und besagte zwei zweite benachbarte Koppelelemente (d, e) im zweiten Gelenk (de) in ihrer Winkelstellung zueinander durch den zweiten Beschlag (11) veränderbar sind.

2. Fahrzeugsitz nach Anspruch 1, **dadurch gekennzeichnet, dass** zwei Koppelelemente (a, g) in ihrer Bewegung parallelgeschaltet sind.

3. Fahrzeugsitz nach Anspruch 1 oder 2, **dadurch gekennzeichnet, dass** die beiden mit dem ersten Koppelelement (a) gelenkig verbundenen Koppelelemente (b, f) über jeweils ein weiteres Gelenk (bg, fg), das beabstandet vom mit dem ersten Koppelelement (a) verbundenden Gelenk (ab, fa) angeordnet ist, mit einem weiteren gemeinsamen Koppelelement (g) verbunden sind, so dass zwei Koppelelemente (a, g) in ihren Relativbewegungen gekoppelt sind.

4. Fahrzeugsitz nach einem der vorhergehenden, **dadurch gekennzeichnet, dass** die beiden Beschläge (10, 11) ein gemeinsames Koppelelement (e) aufweisen, an dessen einander gegenüberliegenden Enden sie angeordnet sind.

5. Fahrzeugsitz nach einem der vorhergehenden, **dadurch gekennzeichnet, dass** zwei einander gegenüberliegende Koppelelemente (b, f) eine dreieckförmige Struktur haben, wobei in jedem der Eckbereiche ein Gelenk (ab, bc, bg oder fa, ef, fg) vorgesehen ist.

6. Fahrzeugsitz nach einem der vorhergehenden, **dadurch gekennzeichnet, dass** mindestens einer der Beschläge (11) an der Sitzstruktur (6) angeordnet ist und eines der Koppelelemente (e) fest mit der Sitzstruktur (6) verbunden ist.

7. Fahrzeugsitz nach Anspruch 6, **dadurch gekennzeichnet, dass** beide Beschläge (10, 11) an der Sitzstruktur (6) angeordnet sind.

8. Fahrzeugsitz nach einem der vorhergehenden, **dadurch gekennzeichnet, dass** sämtliche Gelenke der Höhen-/Neigungseinstellung parallele Schwenkachsen aufweisen.

9. Fahrzeugsitz nach einem der vorhergehenden, **dadurch gekennzeichnet, dass** mindestens einer der Beschläge (10, 11) ein Rastbeschlag ist, insbesondere beide Beschläge Rastbeschläge sind.

## Claims

1. Vehicle seat, in particular a utility vehicle seat, comprising a base (2), a seat structure (6) bearing a seat surface (5) or forming said seat surface, and a plurality of coupling elements (a, b, c, d, e, f, g) which permit an adjustability of the height and inclination of the seat surface (5) relative to the base (2), **characterized in that**
the height is adjusted via a six-member seven-way linkage with six rockers which are formed by seven coupling elements (a, b, c, d, e, f, g), wherein two first adjacent coupling elements (e, f) in a first articulation (ef) are able to be altered in their angular position relative to one another via a first fitting (10) and two second adjacent coupling elements (d, e) are fixed in their angular position relative to one another by a second fitting (11) in a second articulation (de), and
the inclination is adjusted via the six-member seven-way linkage with six rockers which are formed by the seven coupling elements (a, b, c, d, e, f, g), wherein said two adjacent coupling elements (e, f) in the first articulation (ef) are fixed in their angular position relative to one another via a first fitting (10), and said two second adjacent coupling elements (d, e) in the second articulation (de) are able to be altered in their angular position relative to one another by the second fitting (11).

2. Vehicle seat according to Claim 1, **characterized in that** two coupling elements (a, g) are arranged in parallel in terms of their movement.

3. Vehicle seat according to Claim 1 or 2, **characterized in that** the two coupling elements (b, f) connected in an articulated manner to the first coupling element (a) are connected via in each case a further articulation (bg, fg) which is arranged spaced apart from the articulation (ab, fa) connected to the first coupling element (a) with a further common coupling element (g), so that two coupling elements (a, g) are coupled in their relative movements.

4. Vehicle seat according to one of the preceding claims, **characterized in that** the two fittings (10, 11) have a common coupling element (e) arranged on the opposing ends thereof.

5. Vehicle seat according to one of the preceding claims, **characterized in that** two opposing coupling elements (b, f) have a triangular structure, wherein an articulation (ab, bc, bg or fa, ef, fg) is provided in each of the corner regions.

6. Vehicle seat according to one of the preceding claims, **characterized in that** at least one of the fittings (11) is arranged on the seat structure (6) and one of the coupling elements (e) is connected fixedly to the seat structure (6).

7. Vehicle seat according to Claim 6, **characterized in that** the two fittings (10, 11) are arranged on the seat structure (6).

8. Vehicle seat according to one of the preceding claims, **characterized in that** all articulations of the height and inclination adjustment comprise parallel pivot axes.

9. Vehicle seat according to one of the preceding claims, **characterized in that** at least one of the fittings (10, 11) is a latching fitting, in particular both fittings are latching fittings.

## Revendications

1. Siège de véhicule, en particulier siège de véhicule utilitaire, comprenant une base (2), une structure d'assise (6) portant une surface d'assise (5) ou formant celle-ci et une pluralité d'éléments d'accouplement (a, b, c, d, e, f, g), lesquels permettent de régler la hauteur et l'inclinaison de la surface d'assise (5) par rapport à la base (2), **caractérisé en ce que** le réglage en hauteur s'effectue par le biais d'un mécanisme à sept articulations à six éléments comprenant six bras oscillants qui sont formés par sept éléments d'accouplement (a, b, c, d, e, f, g), la position angulaire l'un par rapport à l'autre de deux premiers éléments d'accouplement adjacents (e, f) pouvant être modifiée dans une première articulation (ef) par le biais d'une première ferrure (10), et la position angulaire l'un par rapport à l'autre de deux deuxièmes éléments d'accouplement adjacents (d, e) étant fixée dans une deuxième articulation (de) par une deuxième ferrure (11) et
le réglage d'inclinaison s'effectue par le biais du mécanisme à sept articulations à six éléments comprenant six bras oscillants qui sont formés par les sept éléments d'accouplement (a, b, c, d, e, f, g), la position angulaire l'un par rapport à l'autre desdits deux éléments d'accouplement adjacents (e, f) étant fixée dans la première articulation (ef) par le biais d'une première ferrure (10) et la position angulaire l'un par rapport à l'autre desdits deux deuxièmes éléments d'accouplement adjacents (d, e) pouvant être modifiée dans la deuxième articulation (de) par la deuxième ferrure (11).

2. Siège de véhicule selon la revendication 1, **caractérisé en ce que** deux éléments d'accouplement (a, g) sont montés en parallèle pour ce qui est de leur déplacement.

3. Siège de véhicule selon la revendication 1 ou 2, **caractérisé en ce que** les deux éléments d'accouplement (b, f) reliés de manière articulée au premier élément d'accouplement (a) sont reliés, par le biais d'une articulation (bg, fg) supplémentaire respective qui est disposée à distance de l'articulation (ab, fa) reliée au premier élément d'accouplement (a), à un élément d'accouplement (g) commun supplémentaire, de telle sorte que les déplacements relatifs de deux éléments d'accouplement (a, g) soient accouplés.

4. Siège de véhicule selon l'une quelconque des revendications précédentes, **caractérisé en ce que** les deux ferrures (10, 11) comprennent un élément d'accouplement commun (e) aux extrémités opposées l'une à l'autre duquel elles sont disposées.

5. Siège de véhicule selon l'une quelconque des revendications précédentes, **caractérisé en ce que** deux éléments d'accouplement (b, f) opposés l'un à l'autre ont une structure triangulaire, une articulation (ab, bc, bg ou fa, ef, fg) étant prévue dans chacune des régions de coin.

6. Siège de véhicule selon l'une quelconque des revendications précédentes, **caractérisé en ce qu'**au moins l'une des ferrures (11) est disposée sur la structure d'assise (6) et l'un des éléments d'accouplement (e) est relié fixement à la structure d'assise (6).

7. Siège de véhicule selon la revendication 6, **caractérisé en ce que** les deux ferrures (10, 11) sont disposées sur la structure d'assise (6).

8. Siège de véhicule selon l'une quelconque des revendications précédentes, **caractérisé en ce que** toutes les articulations du réglage en hauteur/d'inclinaison présentent des axes de pivotement parallèles.

9. Siège de véhicule selon l'une quelconque des revendications précédentes, **caractérisé en ce qu'**au moins l'une des ferrures (10, 11) est une ferrure d'encliquetage, en particulier les deux ferrures sont des ferrures d'encliquetage.
